# EUROPEAN PATENT APPLICATION

(11) **EP 4 844 895 A1**
(43) Date of publication of application: **25.11.2026**
(21) Application number: 25741381.5
(22) Date of filing: 07.01.2025
(51) Int. Cl.: H01M 10/658, H01M 10/654, H01M 50/209

(54) **BATTERY ASSEMBLY AND ELECTRICAL POWER SYSTEM**

(30) Priority: 19.01.2024 CN 202410084598
(71) Applicant: BYD Company Limited, Shenzhen, Guangdong 518118 (CN)
(72) Inventor: XU, Yingying, Shenzhen, Guangdong 518118 (CN); ZHANG, Xiaorui, Shenzhen, Guangdong 518118 (CN); LIU, Guoxiong, Shenzhen, Guangdong 518118 (CN); LIN, Wensheng, Shenzhen, Guangdong 518118 (CN); WANG, Gaowu, Shenzhen, Guangdong 518118 (CN)
(74) Representative: Taor, Simon Edward William
(86) International application number: PCT/CN2025/071071
(87) International publication number: WO 2025/152818

(57) **Abstract**

An electrical power system (200), comprising a battery assembly (100). The battery assembly (100) comprises battery cell groups (110), each battery cell group (110) comprises a plurality of battery cells (10), each battery cell (10) comprises an electrode assembly (11) and a casing (12), the electrode assembly (11) is arranged in the casing (12), and the electrode assembly (11) and a first surface (121) of the casing (12) are spaced apart from each other. A plurality of battery cell groups (110) are provided and first surfaces (13) of the battery cells (10) in two adjacent battery cell groups (110) are arranged opposite to each other. The sum of the temperature difference caused within a preset time by the thermal resistance of a spacing region between the electrode assembly (11) and the first surface (121) of the casing (12) and the temperature difference caused within the preset time by the thermal resistance of the first surface (121) of the casing (12) is A, the temperature decreased in the region between the first surfaces (13) of the battery cells (10) in two adjacent battery cell groups (110) within the preset time is B, the minimum temperature of the first surface (13) of the battery cell (10) at the moment when the battery cell (10) triggers thermal runaway is T, and the tolerance temperature of a material system of the battery cell (10) is N, wherein A, B, T, and N satisfy the relational expression: *T-N≤A+B≤500.*

## Description

### CROSS-REFERENCE TO RELATED APPLICATIONS

The present disclosure claims priority to Chinese Patent Application No. 202410084598.0, entitled "BATTERY ASSEMBLY AND ELECTRICAL SYSTEM", filed on January 19, 2024 to the Chinese National Intellectual Property Office, which is incorporated herein by reference in its entirety.

### FIELD

The present disclosure relates to the field of battery technology, and in particular to a battery assembly and an electrical system.

### BACKGROUND

With the rapid development of new energy vehicles, the safety issues of their batteries have also attracted considerable attention from the market. During the production and use of batteries, abuse conditions such as mechanical abuse or internal short circuit may occur, which are highly likely to cause thermal runaway. If the heat generated by a battery cell undergoing thermal runaway is not restrained from spreading, it will rapidly affect the safety of other battery cell groups. Therefore, battery solutions capable of preventing or suppressing thermal diffusion have become a common challenge in the industry.

In the related art, the thermal diffusion design of the battery modules and battery packs is mainly involves adding thermal insulation material at the gap between the batteries to achieve the effect of heat insulation and suppress heat transfer, thereby suppressing the diffusion of heat in the battery. However, battery modules and battery packs have limited space, thermal insulation material may occupy a certain space, too much thermal insulation material may reduce the volumetric energy of the battery, and too little thermal insulation material cannot suppress thermal diffusion effectively.

### SUMMARY

The present disclosure aims to solve at least one of the technical problems existing in the prior art. To this end, one object of the present disclosure is to propose a battery assembly that can suppress thermal diffusion, guaranteeing volumetric energy density.

Another object of the present disclosure is to propose an electrical system.

A battery assembly according to an embodiment of the present disclosure, including: a battery cell groups including at least a battery cell, the battery cell including an electrode assembly and a casing, the electrode assembly is arranged in the casing, and the electrode assembly and a first surface of the casing are spaced apart from each other; the battery cell groups are a plurality, and first surfaces of the battery cells in two adjacent battery cell groups are arranged opposite to each other; the sum of the temperature difference caused within a preset time by the thermal resistance of a spacing region between the electrode assembly and the first surface of the casing and the temperature difference caused within the preset time by the thermal resistance of the first surface of the casing is A, the temperature decreased in the region between the first surfaces of the battery cells in two adjacent battery cell groups within the preset time is B, the minimum temperature of the first surface of the battery cell at the moment when the battery cell triggers thermal runaway is T, and the tolerance temperature of a material system of the battery cell is N, wherein A, B, T and N satisfy the relational expression: T-N≤A+B≤500.

Thus, the sum of the temperature difference caused within a preset time by the thermal resistance of a spacing region between the electrode assembly and the first surface of the casing and the temperature difference caused within the preset time by the thermal resistance of the first surface of the casing is A, the temperature decreased in the region between the first surfaces of the battery cells in two adjacent battery cell groups within the preset time is B, and the relational expression: T-N≤ A+B≤500 is satisfied. This not only suppresses thermal diffusion of one battery cell group to another in the battery assembly, but also ensures volumetric energy density of the battery assembly, thereby ensuring energy endurance of the battery assembly.

In some examples of the present disclosure, thickness of the battery cell is D, a distance between the first surfaces of the battery cells in two adjacent battery cell groups is x, a first substance layer is arranged between the first surfaces of the battery cells in two adjacent battery cell groups, the first substance layer having a thermal conductivity of λ1, and B, x, λ1 and D satisfy the relational expression: B=160* (x/0.5)*(0.03/λ1)*(13.5/D).

In some examples of the present disclosure, x satisfies the relational expression: x > 0, and the first substance layer is at least one of an insulating heat insulation layer, an insulating heat dissipation layer, and an air layer.

In some examples of the present disclosure, x satisfies the relational expression: x = 0, and the first surfaces of the battery cells in two adjacent battery cell groups are in contact with each other.

In some examples of the present disclosure, λ1 satisfies the relational expression: λ1 < 3W/(m*K).

In some examples of the present disclosure, D satisfies the relational expression: 0.01 m < D < 1 m.

In some examples of the present disclosure, the distance between the electrode assembly and inner wall corresponding to the first surface of the casing is d, wall thickness of the casing is a, thermal conductivity of the casing is λ2, d, a and A satisfies the relational expression: A = 20* (d/2) * (0.3/a) * (160/λ2).

In some examples of the present disclosure, a second substance layer is arranged in spacing region between the electrode assembly and the first surface of the casing.

In some examples of the present disclosure, the second substance layer is an insulating heat insulation layer, an insulating heat dissipation layer, and an air layer.

In some examples of the present disclosure, d satisfies the relational expression: 0.002 m < d < 0.012 m.

In some examples of the present disclosure, an insulating heat insulation layer is arranged between the second surfaces of two adjacent battery cells in each battery cell group.

In some examples of the present disclosure, each side of the battery cell in the thickness direction is a second surface respectively, each battery cell group including at least two battery cells in which the second surfaces being in contact with each other, the second surfaces are perpendicular to the first surfaces of the battery cells, and area of the second surface is larger than that of the first surface of the battery cell.

In some examples of the present disclosure, a third substance layer is arranged between the second surfaces of two adjacent battery cells in each of the battery cell group.

In some examples of the present disclosure, the third substance layer is at least one of an insulating heat insulation layer, an insulating heat dissipation layer, and an air layer.

In some examples of the present disclosure, area of the second surface is larger than that of the first surface of the battery cell.

In some examples of the present disclosure, the battery assembly further includes a tray and a cold plate, the tray is arranged open on one side and the cold plate is arranged on the open side of the tray, and the battery cells are each arranged in the tray.

An electrical system according to the present disclosure, including the battery assembly described above.

Additional aspects and advantages of the present disclosure will be set forth partly in the description which follows, and partly will be obvious from the following description, or may be learned through practice of the present disclosure.

### BRIEF DESCRIPTION OF THE DRAWINGS

The above and/or additional aspects and advantages of the present disclosure will become apparent and readily appreciated from the description of the embodiments taken in conjunction with the following accompanying drawings, in which:
FIG. 1 is a schematic diagram of a battery cell in accordance with an embodiment of the present disclosure;
FIG. 2 is a perspective view of a battery cell in accordance with an embodiment of the present disclosure;
FIG. 3 is a schematic diagram of a battery cell group in accordance with an embodiment of the present disclosure;
FIG. 4 is a schematic diagram of a battery assembly in accordance with an embodiment of the present disclosure;
FIG. 5 is a schematic diagram of a battery assembly from another perspective according to an embodiment of the present disclosure;
FIG. 6 is a schematic diagram of a battery assembly from another perspective according to an embodiment of the present disclosure;
FIG. 7 is a schematic diagram of a battery assembly from yet another perspective according to an embodiment of the present disclosure;

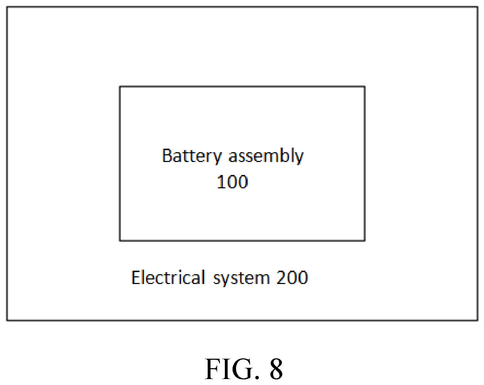

FIG. 8 is a schematic block diagram of an electrical system according to an embodiment of the present disclosure.

Reference Numerals:
100, battery assembly; 110, battery cell group;
10, a battery cell; 11, an electrode assembly; 12, a casing; 121, a first surface of the casing; 122, a second surface; 123, a third surface; 13, a first surface of the battery cell;
20, a first substance layer; 30, a second substance layer; 40, a third substance layer;
200, an electrical system;
30, a tray; 31, a cold plate.

### DETAILED DESCRIPTION

Embodiments of the present disclosure are described in detail below; the embodiments described with reference to the drawings are exemplary.

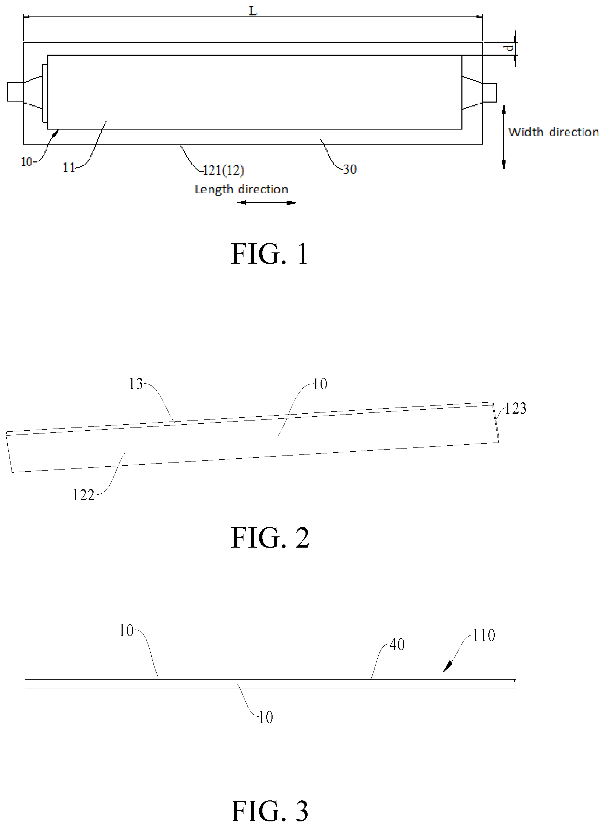

A battery assembly 100 according to an embodiment of the present disclosure is described below with reference to FIGS. 1-7.

With reference to FIGS. 1-7, a battery assembly 100 in accordance with the present disclosure may mainly include a battery cell group 110, wherein the battery cell group 110 includes at least one battery cell 10, the battery cell 10 includes an electrode assembly 11 and a casing 12, the electrode assembly 11 is arranged in the casing 12, the electrode assembly 11 and a first surface 121 of the casing 12 are spaced apart from each other, and the battery cell groups 110 are a plurality, and the first surfaces 13 of the battery cells 10 in two adjacent battery cell groups 110 are arranged opposite to each other.

specifically, both heating and needling can cause thermal runaway of the battery cell 10 in the battery assembly 100, the position in the battery cell 10 at which thermal runaway occurs may be an intermediate position of the battery cell 10, also may be an edge position of the battery cell 10. The casing 12 includes a first surface 121 of the casing 12, the electrode assembly 11 and the first surface 121 of the casing 12 are spaced apart from each other, in this way, when thermal runaway of the electrode assembly 11 occurs, the electrode assembly 11 can be prevented from being in direct contact with the casing 12, allowing heat to be transferred rapidly and massively to the outside of the battery cell 10 through the casing 12, thus the thermal runaway battery cell 10 can be prevented from causing thermal runaway from other non-thermal runaway battery cells 10, which in turn can reduce the occurrence of safety issues with the battery assembly 100. The electrode assembly 11 and the first face 121 of the casing 12 are spaced apart from each other, such that heat generated by thermal runaway occurring on the electrode assembly 11 can be preferentially transferred on the thermal runaway electrode assembly 11 and quickly dissipated by the heat dissipation means.

Furthermore, the battery assembly 100 may include a plurality of battery cell groups 110 composed of a plurality of battery cells 10, this may increase the battery capacity of the battery assembly 100 and improve the endurance capability of the battery assembly 100. Both sides of the battery cell 10 in the width direction include the first surfaces 13 of the battery cell 10, and the first surfaces 13 of the battery cells 10 in adjacent battery cell groups 110 are arranged oppositely, so that heat can be transferred through the first surfaces 13 of the battery cells 10 in adjacent battery cell groups 110.

Furthermore, when one battery cell 10 in a battery cell group 110 undergoes thermal runaway, the diffusion path of heat in the battery assembly 100 includes the spacing region between the electrode assembly 11 occurring thermal runaway and the corresponding first surface 121 of the casing 12, the region between the first surface 121 of the casing 12 corresponding to the electrode assembly 11 occurring thermal runaway and the first surfaces 13 of the battery cells 10 in adjacent two battery cell groups 110, and delivering to other adjacent battery cells 10 along the direction perpendicular to the second surface 122 of the battery cell 10. Wherein, a sum of the temperature difference caused within a preset time by the thermal resistance of a spacing region between the electrode assembly 11 and the first surface 121 of the casing 12 and the temperature difference caused within the preset time by the thermal resistance of the first surface 121 of the casing 12 is set A, the temperature decreased in the region between the first surfaces 13 of the battery cells 10 in two adjacent battery cell groups 110 within the preset time is set B, the minimum temperature of the first surface 13 of the battery cell 10 at the moment when the battery cell 10 triggers thermal runaway is set T, and the tolerance temperature of a material system of the battery cell 10 is set N, and A, B, T and N satisfy the relational expression: T-N≤A+B≤500. The above range requirements can ensure that when thermal runaway of the battery cell 10 within one battery cell group 110 occurs, thermal diffusion is only within the battery cell group 110, and will not transferred to the battery cells 10 in the adjacent battery cell group 110, thus can effectively suppress thermal diffusion within the battery assembly 100, and can also ensure volumetric energy density of the battery assembly 100 to ensure energy endurance of the battery assembly 100.

In an embodiment of the present disclosure, the preset time includes, but is not limited to, 10 minutes, the tolerance temperature of the material system in the battery assembly 100 is the lowest thermal runaway temperature of the material of the battery cell 10, thermal runaway of the battery cell 10 occurs when the temperature in the material system is higher than its tolerance temperature. The material systems of the battery cell 10 include, but are not limited to, lithium iron phosphate system and ternary system, wherein tolerance temperature of the lithium iron phosphate system is 220 ° C and tolerance temperature of the ternary systems is 180 ° C, and T satisfies the relational expression: 300≤T≤800 in actual measurements.

Furthermore, T-N is the temperature difference between the first surface 13 of the battery cell 10 and the material system of the battery cell 10. According to some embodiments of the present disclosure, setting the sum of the temperature difference caused within a preset time by the thermal resistance of the spacing region between the electrode assembly 11 and the first surface 121 of the casing 12, the temperature difference caused within the preset time by the thermal resistance of the first surface 121 of the casing 12, and the temperature decreased in the region between the first surfaces 13 of the battery cells 10 in two adjacent battery cell groups 110 within the preset time exceeds the temperature difference between the first surface 13 and the material system of the battery cell 10 at the moment that the battery cell 10 triggers thermal runaway. At this time, heat is diffused outward from the electrode assembly 11, heat transfer may be reduced by the spacing region between the electrode assembly 11 and the first surface 121 of the casing 12, the first surfaces 13 of the battery cells 10 and the region between the first surfaces 13 of the battery cells 10 in two adjacent battery cell groups 110. This extends the time of heat transfer through the second surface 122 towards the direction of the electrode assembly 11 of an adjacent and non-thermal runaway battery cell 10 when the thermal runaway battery cell 10 triggers thermal runaway, thereby achieving a balance between heat insulation and heat dissipation. And this can prevent heat from accumulating on battery cell 10 in adjacent and non-thermal runaway battery cell groups 110 beyond their tolerance temperature, which can effectively inhibit heat from spreading in the battery assembly 100.

According to further embodiments of the present disclosure, setting the sum of the temperature difference caused within a preset time by the thermal resistance of the spacing region between the electrode assembly 11 and the first surface 121 of the casing 12, the temperature difference caused within the preset time by the thermal resistance of the first surface 121 of the casing 12, and the temperature decreased in the region between the first surfaces 13 of the battery cells 10 in two adjacent battery cell groups 110 within the preset time equals the temperature difference between the first surface 13 and the material system of the battery cell 10. At this time, when heat is diffused outward from the electrode assembly 11, it can be just blocked by the spacing region between the electrode assembly 11 and the first surface 121 of the casing 12, the first surface 121 of the casing 12, and the region between the first surfaces 13 of the battery cells 10 in two adjacent battery cell groups 110, thus reduce heat transfer. This extends the time of heat transfer through the second surface 122 towards the direction of the electrode assembly 11 of an adjacent and non-thermal runaway battery cell 10 when the thermal runaway battery cell 10 triggers thermal runaway, thereby achieving a balance between heat insulation and heat dissipation. This not only can suppress heat diffusion between two adjacent battery cell groups 110 in the battery assembly 100, but also can minimize the space occupied in the battery assembly 100 by the spacing region between the electrode assembly 11 and the first surface 121 of the casing 12, the first surface 121 of the casing 12, and the region between the first surfaces 13 of the battery cells 10 in two adjacent battery cell groups 110, so that a greater number of battery cells 10 can be arranged in the battery assembly 100, thus increasing the volumetric energy density of the battery assembly 100.

Furthermore, setting the sum of the temperature difference caused within a preset time by the thermal resistance of the spacing region between the electrode assembly 11 and the first surface 121 of the casing 12, the temperature difference caused within the preset time by the thermal resistance of the first surface 121 of the casing 12, and the temperature decreased in the region between the first surfaces 13 of the battery cells 10 in two adjacent battery cell groups 110 within the preset time do not exceed 500 ° C. This can prevent a high proportion of the space occupied in the battery assembly 100 by the spacing region between the electrode assembly 11 and the first surface 121 of the casing 12, the first surface 121 of the casing 12, and the region between the first surfaces 13 of the battery cells 10 in two adjacent battery cell groups 110, so that a greater number of battery cells 10 can be arranged in the battery assembly 100, which may guarantee a volumetric energy density of the battery assembly 100, and is advantageous in reducing production and use costs of the battery assembly 100.

It should be also noted that, if the sum of the temperature difference caused within a preset time by the thermal resistance of the spacing region between the electrode assembly 11 and the first surface 121 of the casing 12, the temperature difference caused within the preset time by the thermal resistance of the first surface 121 of the casing 12, and the temperature decreased in the region between the first surfaces 13 of the battery cells 10 in two adjacent battery cell groups 110 within the preset time is set less than the temperature difference between the first surface 13 and the material system of the battery cell 10, the spacing region between the electrode assembly 11 and the first surface 121 of the casing 12, the first surface 121 of the casing 12, and the region between the first surfaces 13 of the battery cells 10 in two adjacent battery cell groups 110 cannot completely isolate or dissipate heat generated by the electrode assembly 11 and transferred to the first surfaces 13 of the battery cells 10 in the adjacent two battery cell groups 110, excess heat will enter the battery cells 10 through the first surfaces 13 of the battery cells 10 in the adjacent two battery cell groups 110 and transfer to the electrode assembly 11, which will tend to cause thermal runaway of the battery cells 10 in the adjacent cell groups 110.

if the sum of the temperature difference caused within a preset time by the thermal resistance of the spacing region between the electrode assembly 11 and the first surface 121 of the casing 12, the temperature difference caused within the preset time by the thermal resistance of the first surface 121 of the casing 12, and the temperature decreased in the region between the first surfaces 13 of the battery cells 10 in two adjacent battery cell groups 110 within the preset time exceeds 500 ° C, although it can suppress thermal diffusion effectively, the proportion of the space occupied in the battery assembly 100 by the spacing region between the electrode assembly 11 and the first surface 121 of the casing 12, the first surface 121 of the casing 12, and the region between the first surfaces 13 of the battery cells 10 in two adjacent battery cell groups 110 is too high, resulting in a reduced number of battery cells 10, which thereby reduce volumetric energy density of the battery assembly 100, and affect the endurance of the battery assembly 100.

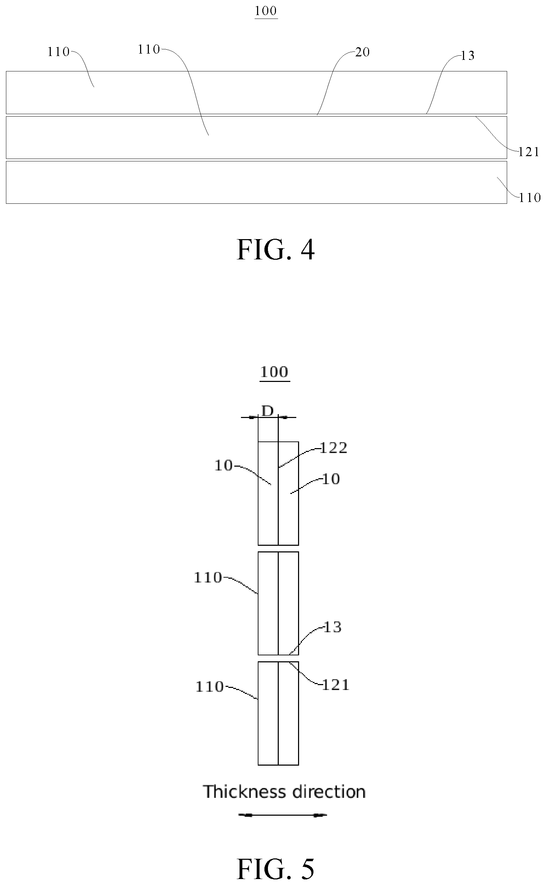

As show in FIG. 5, the thickness of the battery cell 10 is D, the distance between the first surfaces 13 of the battery cells 10 in two adjacent battery cell groups 110 is x, a first substance layer 20 is arranged between the first surfaces 13 of the battery cells 10 in two adjacent battery cell groups 110, the thermal conductivity of the first substance layer 20 is λ1, and the values of B, x, λ1 and D satisfy the relational expression: B=160*(x/0.5)*(0.03/λ1)*(13.5/D). Specifically, when the heat is transferred between two adjacent battery cell groups 110, along the thickness direction of the battery cell 10 it passes sequentially through the spacing region between the electrode assembly 11 and the first surface 121 of the casing 12, the first surface 121 of the casing 12, and the region between the first surfaces 13 of the battery cells 10 in two adjacent battery cell groups 110. In this way, the temperature decreased in the region between the first surfaces 13 of the battery cells 10 in two adjacent battery cell groups 110 within the preset time can be calculated according to the thickness of the battery cell 10, the distance between the first surfaces 13 of the battery cells 10 in two adjacent battery cell groups 110, and the thermal conductivity of the first substance layer 20.

Furthermore, the battery cells 10 in two adjacent battery cell groups 110 are spaced apart, which can provide location for the first substance layer 20 between two adjacent battery cell groups 110 and may prevent direct contact between first surfaces 13 of battery cells 10 in two adjacent battery cell groups 110 causing thermal diffusion of the battery assembly 100.

According to some embodiments of the present disclosure, x satisfies the relationship: x > 0 and the first substance layer 20 is at least one of an insulating heat insulation layer, an insulating heat dissipation layer and an air layer. Specifically, when x > 0, a gap exists between the first surfaces 13 of battery cells 10 in two adjacent battery cell groups 110 and may be used to arrange at least one of the insulating heat insulation layer, the insulating heat dissipation layer and the air layer.

Furthermore, he insulating heat insulation layer has heat insulation effect on the heat transferred between the first surfaces 13 of the battery cells 10 in two adjacent battery cell groups 110, which can enhance the suppressing effect on heat transfer, and further prevent thermal diffusion in the battery assembly 100. The insulating heat dissipation layer may transfer and dissipate the heat rapidly between the first surfaces 13 of the battery cells 10 in two adjacent battery cell groups 110, and can accelerate the rate of heat dissipation before reaching the first surface 13 of a battery cell 10 in the non-thermal runaway battery cell groups 110, in turn, heat transfer to the first surfaces 13 of the battery cells 10 in the non-thermally runaway battery cell groups 110 can be reduced, which can enhance the effect of suppressing thermal diffusion of the battery assembly 100. An air layer can also be arranged between the first surfaces 13 of the battery cells 10 in two adjacent battery cell groups 110, which can insulate heat transfer and can be beneficial in suppressing thermal diffusion of the entire battery assembly 100.

According to some embodiments of the present disclosure, when the first surfaces 13 of the battery cells 10 in two adjacent battery cell groups 110 are filled with the insulating heat insulation layer, λ1 satisfies the relational expression: λ1 <3W/(m*K). Specifically, setting the thermal conductivity of the first substance layer 20 to be less than 3W/(m*K) can ensure the reliability of the first material layer 20 in suppressing the diffusion of heat generated by the thermal runaway battery cell group 110 to the non-thermal runaway battery cell group110. If the thermal conductivity of the first substance layer 20 is greater than 3W/(m*K), then the thermal conductivity of the first substance layer 20 is too large and requires more space for heat insulation and reduces the volumetric energy density of the battery assembly 100.

According to other embodiments of the present disclosure, when the first surfaces 13 of the battery cells 10 in two adjacent battery cell groups 110 are filled with the first substance layer 20, λ1 satisfies the relational expression: λ1> 3W/(m*K). Specifically, setting the thermal conductivity of the first substance layer 20 to be greater than 3W/(m*K) can enable heat to be transferred to the first material layer 20 for rapid heat dissipation, thereby reducing the temperature of thermal diffusion and thus reducing the probability of thermal runaway of the battery cell group 110 that has not yet experienced thermal runaway. If the thermal conductivity of the first substance layer 20 is less than 3 W/(m*K), then the first substance layer 20 has limited heat dissipation capacity and heat will be transferred to the surrounding battery cells 10 that has not yet experienced thermal runaway.

According to an embodiment of the present disclosure, D satisfies the relational expression: 0.01 m < D < 1 m. Specifically, if the thickness of the battery cell 10 is set to be less than 0.01 m, then the structural strength of the batter cell 10 is too weak, affecting the battery cell 10 structural reliability, and if the thickness of the battery cell 10 is set greater than 1 m, it is disadvantageous to dissipate heat from the battery cell 10 and affects the safety of the battery cell 10. Thus, setting the thickness of the battery cell 10 between 0.01 m and 1 m not only can ensure the structural strength of the battery cell 10, but also can ensure the heat dissipation of the battery cell 10, which can enable rapid heat dissipation from a thermal runaway battery cell 10, reducing the risk of thermal diffusion in the battery assembly 100.

According to an embodiment of the present invention, the distance between the electrode assembly 11 and the inner wall corresponding to the first surface 121 of the casing 12 is d, the wall thickness of the casing 12 is a, the thermal conductivity of the casing 12 is λ2, and d, a and A satisfy the relational expression: A =20*(d/2)*(0.3/a)*(160/λ2). Specifically, according to the distance between the electrode assembly 11 and the inner wall corresponding to the first surface 121 of the casing 12, the wall thickness of the casing 12, and the thermal conductivity of the casing 12, the sum of the temperature difference caused within a preset time by the thermal resistance of a spacing region between the electrode assembly 11 and the first surface 121 of the casing 12 and the temperature difference caused within the preset time by the thermal resistance of the first surface 121 of the casing 12 can be calculated.

As shown in FIG. 1, a second substance layer 30 is arranged in the spacing region between the electrode assembly 11 and the first surface 121 of the casing 12. Specifically, the second substance layer 30 may reduce the heat transferred from the electrode assembly 11 to the first surface 13 of the battery cell 10, and can suppress heat transfer to the first surfaces 13 of the battery cells 10 in two adjacent cell groups 110, which in turn can prevent heat of a thermal runaway battery cell 10 from being transferred to a non-thermal runaway battery cell 10, thus can prevent the non-thermal runaway cell 10 from thermal runaway, thus improving operational safety of the battery assembly 100.

According to an embodiment of the present invention, the second material layer 30 is at least one of an insulating heat insulation layer, an insulating heat dissipation layer, and an air layer. Specifically, the insulating heat insulation layer has heat insulation effect on the heat transferred to the spacing region between the electrode assembly 11 and the first surface 121 of the casing 12, which can enhance the suppressing effect on heat transfer, and further prevent thermal diffusion in the battery assembly 100. The insulating heat dissipation layer may transfer and dissipate the heat rapidly in the spacing region between the electrode assembly 11 and the first surface 121 of the casing 12, and can accelerate the rate of heat dissipation before reaching the first surface 13 of a non-thermal runaway battery cell 10, in turn, heat transfer to the first surfaces 13 of the non-thermally runaway battery cells 10 can be reduced, which can enhance the effect of suppressing thermal diffusion of the battery assembly 100. An air layer can also be arranged in the spacing region between the electrode assembly 11 and the first surface 121 of the casing 12, which can insulate heat transfer and can be beneficial in suppressing thermal diffusion of the entire battery assembly 100.

As shown in FIG. 1, d satisfies the relational expression: 0.002 m < d < 0.012 m. Specifically, if the distance between the electrode assembly 11 and the inner wall corresponding to the first surface 121 of the casing 12 does not exceed 0.002 m, then the distance between the electrode assembly 11 and the casing 12 is too close, making it inconvenient to arrange the second substance layer 30 between the electrode assembly 11 and the corresponding inner wall of the first surface 121 of the casing 12. If the distance between the electrode assembly 11 and the inner wall corresponding to the first surface 121 of the casing 12 exceeds 0.012 m, the capacity density of the battery cell 10 is affected. The distance between the electrode assembly 11 and the inner wall corresponding to the first surface 121 of the casing 12 is set between 0.002 m and 0.012 m may not only facilitate the assembly of the second substance layer 30, but may also guarantee the volumetric energy density of the battery cell 10.

In an embodiment of the invention, the distance between the electrode assembly 11 and the inner wall corresponding to the first surface 121 of the casing 12 is preferably set between 0.002 m and 0.008 m, insulating member may be filled between the electrode assembly 11 and the inner wall corresponding to the first surface 121 of the casing 12, and the insulating member including but not limited to polypropylene spacers. A heat insulation member may also be filled, including, but not limited to, polyurethane foam. In addition, no filling may be performed between the electrode assembly 11 and inner walls corresponding to the first surface 121 of the casing 12.

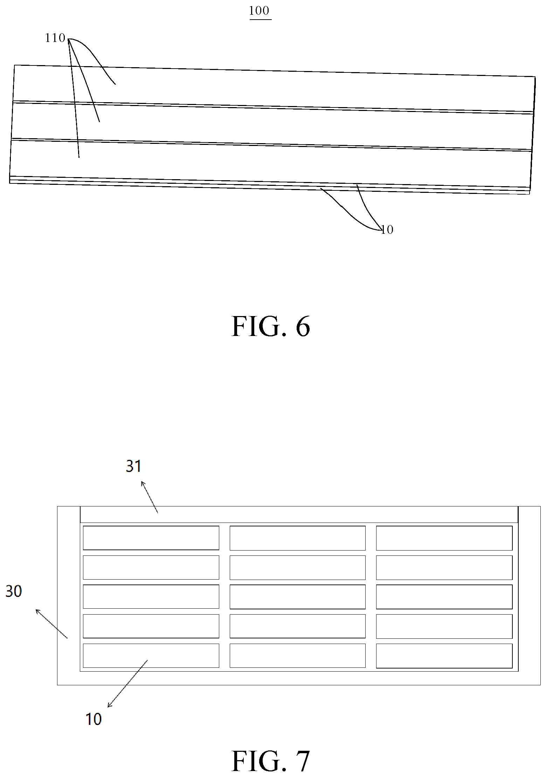

As shown in FIG. 6, stacking three battery cells 10 along the second surface 122 to form a battery cell group 110, three battery cell groups 110 are arranged along the direction perpendicular to the first surface 13 of the battery cells 10. Needling the battery cell group 110 in the middle to trigger thermal diffusion of the topmost battery cell 10 in the battery cell group 110, and observing if thermal runaway has occurred (i.e. Determining whether thermal diffusion has occurred) from adjacent battery cells 10 after thermal runaway has ended. For a single battery cell 10, the value of d, a, λ1, x, D, and λ2 are designed and selected respectively. Wherein, the battery cells 10 are designed with lithium iron phosphate system. T is measured at 400 ° C, λ1 and λ2 are measured by thermal conductivity meter, and the following table shows values for various sets of examples and corresponding experimental results:

| Serial number | X (mm) | λ₁ (W/(m*K)) | D (mm) | d (mm) | a (mm) | λ₂ (W/(m*K)) | B | A | A+B | T(°C) | N(°C) | T-N(°C) | whether thermal diffusion occur | volumetric energy density (Wh/L) |
|---|---|---|---|---|---|---|---|---|---|---|---|---|---|---|
| Example 1 | 0.50 | 0.03 | 13.50 | 2.00 | 0.30 | 160.00 | 160.00 | 20.00 | 180.00 | 400.00 | 220.00 | 180.00 | no | 274.3 |
| Example 2 | 1.00 | 0.03 | 13.50 | 1.00 | 0.30 | 160.00 | 320.00 | 10.00 | 330.00 | 400.00 | 220.00 | 180.00 | no | 265 |
| Example 3 | 1.50 | 0.03 | 13.50 | 1.00 | 0.30 | 160.00 | 480.00 | 10.00 | 490.00 | 400.00 | 220.00 | 180.00 | no | 254 |
| Example 4 | 0.00 | 0.03 | 13.50 | 4.00 | 0.30 | 30.00 | 0.00 | 213.33 | 213.33 | 400.00 | 220.00 | 180.00 | no | 276 |
| Comparative Example 1 | 0.00 | 0.03 | 13.50 | 2.00 | 0.30 | 160.00 | 0.00 | 20.00 | 20.00 | 400.00 | 220.00 | 180.00 | yes | 285 |
| Comparative Example 2 | 0.50 | 0.03 | 13.50 | 1.00 | 0.30 | 150.00 | 160.00 | 10.67 | 170.00 | 400.00 | 220.00 | 180.00 | yes | 277 |
| Comparative Example 3 | 1.50 | 0.03 | 13.50 | 1.00 | 0.30 | 50.00 | 480.00 | 32.00 | 512.00 | 400.00 | 220.00 | 180.00 | no | 248 |

Comparing Examples 1-4 and Comparative Examples 1-2 in the Table, it can be seen that when the value of A + B is greater than or equal to the value of T-N, no thermal diffusion occurs in the entire the battery assembly 100, that is, the battery cell groups 110 adjacent to the thermal runaway battery cell group 110 does not occur thermal runaway. However, when the value of A + B is less than T-N, thermal diffusion occurs in the battery assembly 100. Thus, when the value of A + B is greater than or equal to the value of T-N, an heat insulation effect between two adjacent battery cell groups 110 can be guaranteed, avoiding safety risks in the thermal runaway battery assembly 100, guaranteeing safety of adjacent battery cell groups 110 and improving safety of the battery assembly 100 as a whole.

Comparing Examples 1-4 and the Comparative Example 3 in table, it can be seen when value of A + B is greater than 500, volumetric energy density of overall battery assembly 100 is less than 250 Wh/L and design requirements of the battery cell 10 cannot be met. Specifically, when the distance between the electrode assembly 11 and the first surface 121 of the casing 12 is too large, heat is difficult to transfer through the first surface 121 of the casing 12 to adjacent battery cell groups 110, and the risk of thermal diffusion of the battery assembly 100 is low, but the volume occupied by the electrode assembly 11 within the battery cell 10 is too low, resulting in a too low volumetric energy density of the battery cell 10, which in turn may result in the battery cell 10 failing to meet the normal operating requirements of the battery assembly 100.

As shown in FIGS. 3-6, each side of the battery cell 10 in the thickness direction is a second surface 122 respectively, each battery cell group 110 includes at least two battery cells 10 in which the second surfaces 122 being in contact with each other. That is, in the two battery cells 10 in contact with each other, the second surfaces 122 of the two are in contact with each other, the second surface 122 is perpendicular to the first surface 13 of the battery cell 10. Specifically, each side of the battery cell 10 in the thickness direction is set as second surface 122, and the second surface 122 is perpendicular to the first surface 13 of the battery cell 10. When the battery cell 10 occur thermal runaway, heat can be transferred to the outside through the two different directions of the first surface 13 and the second surface 122 of the battery cell 10. In an embodiment of the present disclosure, the structure of the electrode assembly 11 includes a stacked structure and a wound structure. In the case where the electrode assembly 11 is a stacked structure, the area of the second surface 122 is larger than the area of the first surface 13 of the battery cell 10. In the case where the electrode assembly 11 is a wound structure, the larger surface of the first surface 13 and the second surface 122 of the battery cell 10 is a contact surface of each of the two adjacent battery cells 10 in each battery cell group 110. The cells 10 in a stacked structure will be described below. In embodiments of the present disclosure, each battery cell group 110 may also include only one battery cell 10.

Furthermore, the area of the second surface 122 of the battery cell 10 is larger than the area of the first surface 13 of the battery cell 10, that is, the heat transfer rate of the first surface 13 is less than heat transfer the rate of the second face 122 of the battery cell 10. When the electrode assembly 11 occurs thermal runaway, the amount of heat transferred through the first surface 13 of the battery cell 10 is less than the amount of heat transferred through the second surface 122, this reduces the transfer of heat through the first surface 13 of the battery cell 10 to the battery cells 10 in the adjacent battery cell groups 110, heat transfer between adjacent battery cell groups 110 in the battery assembly 100 can thereby be effectively reduced. In this way, in two adjacent battery cell groups 110, when the first surfaces 13 of the battery cell 10 are arranged oppositely, it can reduce the heat transfer from the thermal runaway battery cell groups 110 to the non-thermal runaway battery cell groups 110, and can suppress diffusion of the heat between adjacent battery cell groups110, and can suppress diffusion of the heat in the battery assembly 100.

In addition, area of first surface of battery cell 10 is smaller than the second surface 122, which may reduce volume of first substance layer 20 arranged between the first surfaces 13 of the battery cells 10 in two adjacent battery cell groups 110, may reduce heat insulation space between the first surfaces 13 of battery cells 10 in two adjacent battery cell groups 110, and may facilitate increased space utilization of battery assembly 100.

In an embodiment of the present disclosure, the battery cell 10 further includes third surfaces 123 on both sides along its length direction. According to some embodiments of the present disclosure, at least one of the first surface 13, the second surface 122 and the third face sur123 of the battery cell 10 is arranged an electrode post and an explosion-proof valve. According to other embodiments of the present disclosure, at least two of the first surface 13, the second surface 122 and the third face sur123 of the battery cell 10 is arranged an electrode post and an explosion-proof valve.

As shown in FIG. 3, a third material layer 40 is arranged between the second surfaces 122 of two adjacent battery cells 10 in each battery cell group 110. Specifically, the third substance layer 40 may reduce the amount of heat transferred from the electrode assembly 11 to the second surface 122 of the battery cell 10, heat transfer between the second surfaces 122 of two adjacent battery cells 10 can be suppressed, which in turn can prevent heat transferring from a thermal runaway battery cell 10 to a non-thermal runaway battery cell 10, can prevent the non-thermal runaway battery cell 10 occurring thermal runaway , and can improve operational safety of the battery assembly 100.

According to an embodiment of the present disclosure, the third substance layer 40 is at least one of an insulating heat insulation layer, an insulating heat dissipation layer, and an air layer. Specifically, the he insulating heat insulation layer has heat insulation effect on the heat transferred to the space between the second surfaces 122 of the two adjacent battery cells 10, which can enhance the suppressing effect on heat transfer, and further prevent thermal diffusion in the battery assembly 100. The insulating heat dissipation layer may transfer and dissipate the heat rapidly in the space between the second surfaces 122 of the two adjacent battery cells 10, and can accelerate the rate of heat dissipation before reaching the second surface 122 of a non-thermal runaway battery cell 10, in turn, heat transfer to the second surface 122 of the non-thermally runaway battery cells 10 can be reduced, which can enhance the effect of suppressing thermal diffusion of the battery assembly 100. An air layer can also be arranged between the second surfaces 122 of the two adjacent battery cells 10, which can insulate heat transfer and can be beneficial in suppressing thermal diffusion of the entire battery assembly 100.

In an embodiment of the present disclosure, as shown in FIG. 7, the battery assembly 100 further includes a tray 30 and a cold plate 31, the tray 30 is arranged open on one side, the cold plate 31 is arranged at the open side of the tray 30, and the battery cells 10 are each arranged in the tray 30. The cold plate 31 is arranged at locations including, but not limited to, between the tray 30 and a battery cell, between two adjacent battery cells, and an upper portion of a battery cell. This design not only can facilitate the arrangement of the battery assembly 100, but also can help the battery pack 100 dissipate heat quickly. The battery cells 10 are arranged on the upper side of the tray 30, heat generated in the battery cell 10 can be rapidly dissipated through the tray 30, which can be rapidly dissipated through the tray 30 when the battery cell 10 occur thermal runaway. In addition, heat can also be dissipated through the cold plate 31 when the battery cell 10 occur thermal runaway, so as to prevent heat from diffusing in the battery assembly 100 and affecting the operational safety of other battery cells 10 in the battery assembly 100.

According to some embodiments of the present disclosure, the first surfaces 13 of the lowermost battery cells 10 in the plurality of battery cell groups 110 contact the cold plate 31. According to further embodiments of the present disclosure, the second surfaces 122 of the lowermost battery cells 10 in the plurality of battery cell groups 110 contact the cold plate 31. According to still further embodiments of the present disclosure, both the first surfaces 13 and the second surfaces 122 of the lowermost battery cells 10 in the plurality of cell groups 110 contact the cold plate 31. This arrangement can make heat generated by the thermal runaway battery cell 10 in the battery assembly 100 to be transferred to the cold plate 31 through the lowermost battery cell 10, and allow the heat to diffuse through the cold plate 31 towards the heat sink to accelerate heat dissipation in the battery assembly 100.

According to some embodiments of the present disclosure, the second surfaces 122 of the battery cell 10 in one battery cell group 110 or multi battery cell groups 110 in the battery assembly 100 can be connected to the tray 30 or cold plate 31, wherein the second surface 122 of the battery cell 10 is connected to the tray 30 or cold plate 31 by means including, but not limited to, direct contact, bonding, screwing, and riveting. According to other embodiments of the present disclosure, the first surfaces 13 of the battery cells 10 in one battery cell group 110 or multi battery cell groups 110 in the battery assembly 100 may be in direct contact with the tray 30 or cold plate 31, wherein the first surface 13 of the battery cell 10 is connected to the tray 30 or cold plate 31 by means including, but not limited to, direct contact, bonding, screwing, and riveting.

According to some embodiments of the disclosure, when the number of battery cells 10 in the same battery cell group 110 is more than two, the second surface 122 of the battery cell 10 closely contact the cold plate 31, in the event of thermal runaway of the battery cell 10, heat may be transferred from the cold plate 31 to a heat sink, accelerating the cooling rate of the battery cell 10, this reduces the probability of diffusion of the battery cells 10. In this way, even if one of the battery cells 10 occur thermal runaway, it will not cause thermal runaway in the adjacent battery cell groups 110, thus slowing down heat dissipation and reducing risk of safety issues for the battery assembly 100. In embodiments of the present disclosure, an insulating heat insulation layer or an insulating heat dissipation layer may be filled between two adjacent battery cells 10 in the same battery cell group 110, or may not be filled. An insulating heat insulation layer or an insulating heat dissipation layer may be filled between two adjacent battery cell groups 110, and an insulating heat insulation layer or an insulating heat dissipation layer may be filled between the battery cell group 110 and the casing 12.

According to further embodiments of the present disclosure, when the number of battery cell 10 in the same battery cell group 110 is one, the second surface 122 of the battery cell 10 closely contact the cold plate 31, in the event of thermal runaway of the battery cell 10, heat may be transferred from the cold plate 31 to a heat sink, accelerating the cooling rate of the battery cell 10, and it will not cause thermal runaway in the adjacent battery cell groups 110, thus slowing down heat dissipation and reducing risk of safety issues for the battery assembly 100. In embodiments of the present disclosure, an insulating heat insulation layer or an insulating heat dissipation layer may be filled between two adjacent cell groups 110, and an insulating heat insulation layer or an insulating heat dissipation layer may be filled between the battery cell group 110 and the casing 12.

According to still further embodiments of the present disclosure, when the number of the battery cells 10 in the same battery cell group 110 is more than two, the first surface 13 of the battery cell 10 closely contact the cold plate 31, except the battery cell 10 closely contacting the cold plate 31, in the event of any one of other battery cells 10 occurs thermal runaway, the heat may induce or may not induce thermal diffusion of other battery cells 10 within the battery cell group 110. Heat may diffuse evenly through the second surfaces 122 of the adjacent battery cells 10 in the same battery cell group 110 contacting within the battery cell group 110, at the same time reducing the temperature of thermal diffusion, and as a result, thermal runaway in adjacent battery cell groups 110 will not be incurred. This slows down thermal diffusion, and reduces safety issues of the battery assembly 100. In embodiments of the present disclosure, an insulating heat insulation layer or an insulating heat dissipation layer may be filled between two adjacent battery cell groups 110, and an insulating heat insulation layer or an insulating heat dissipation layer may be filled between the battery cell group 110 and the casing 12.

An embodiment according to the present disclosure, the surfaces with the largest area of adjacent battery cells 10 in the same battery cell group 110 are selected to be in contact with each other, and the surfaces with smaller area of adjacent battery cells 10 are selected to oppositely arrange. This structure for suppressing thermal diffusion of the battery assembly 100 is not only suitable for use in any battery, module, and package, but also suitable to place a high thermal conductivity material inside the battery to closely contact the electrode assembly or casing, so as to achieve the purpose of uniform temperature. Embodiments of the present disclosure may be employed between modules to prevent thermal diffusion between modules.

An electrical system according to the present disclosure, configured with the battery assembly 100 in the embodiment of the present disclosure, by sizing the contacting surface between adjacent battery cells 10, and sizing the contacting surfaces between adjacent battery cell groups 110 can suppress the transfer and diffusion of significant amounts of heat between adjacent battery cells 10 when the battery cell 10 occurs thermal runaway, which can effectively improve the safety of operation of the battery assembly 100 and, in turn, the safety of the electrical system.

In the description of the present disclosure, it should be understood that the terms "central", "longitudinal", "lateral", "length", "width", "thickness", "upper", "lower", "front", "back", "left", "right", "vertical", "horizontal", "top", "bottom", "inner", "outer", "clockwise", "counterclockwise", "circumferential", "radial", "circumferential", and the like indicate an orientation or positional relationship based on that shown in the drawings. It is merely for ease of description of the disclosure and simplicity of description, it is not intended to indicate or imply that the devices or elements referred to must have a particular orientation, be constructed and operate in a particular orientation, and therefore cannot be construed as limiting the present disclosure.

In the description of this specification, reference to "one embodiment," "some embodiments," "illustrative embodiment," "an example," "a particular example," or "some examples" or the like means that a particular feature, structure, material, or characteristic described in connection with the embodiment or example is included in at least one embodiment or example of the present disclosure. Illustrative expressions of such terms do not necessarily refer to the same embodiment or example.

Although embodiments of the present disclosure have been shown and described, it will be understood by those of ordinary skill in the art that many changes, modifications, substitutions, and alterations may be made to these embodiments without departing from the principles and spirit of the present disclosure, the scope of which is defined by the following claims and their equivalents.

## Claims

1. A battery assembly (100) comprising:
battery cell groups (110), the battery cell group (110) comprising at least one battery cell (10), the battery cell (10) comprising an electrode assembly (11) and a casing (12), the electrode assembly (11) being arranged in the casing (12), and the electrode assembly (11) and a first surface (121) of the casing (12) being spaced apart from each other;
wherein, the battery cell groups (110) being a plurality, and the first surfaces (13) of the battery cells (10) in two adjacent battery cell groups (110) being arranged opposite to each other;
the sum of the temperature difference caused within a preset time by the thermal resistance of a spacing region between the electrode assembly (11) and the first surface (121) of the casing (12) and the temperature difference caused within the preset time by the thermal resistance of the first surface (121) of the casing (12) is A, the temperature decreased in the region between the first surfaces (13) of the battery cells (10) in two adjacent battery cell groups (110) within the preset time is B, the minimum temperature of the first surface (13) of the battery cell (10) at the moment when the battery cell (10) is triggered thermal runaway is T, and the tolerance temperature of a material system of the battery cell (10) is N, wherein A, B, T and N satisfy the relational expression: T-N≤A+B≤500.

2. The battery assembly (100) according to claim 1, wherein thickness of the battery cell (10) is D, distance between the first surfaces (13) of battery cells (10) in two adjacent battery cell groups (110) is x, and a first substance layer (20) is arranged between the first surfaces (13) of the battery cells (10) in two adjacent battery cell groups (110), the first substance layer has thermal conductivity of λ1, B, x, λ1 and D satisfy the relational expression: B=160*(x/0.5)*(0.03/λ1)*(13.5/D).

3. The battery assembly (100) according to claim 2, wherein x satisfies the relational expression: x > 0, and the first substance layer (20) is at least one of insulating heat insulation layer, insulating heat dissipation layer, and air layer.

4. The battery assembly (100) of according to claim 2 or 3, wherein x satisfies the relational expression: x = 0, and the first surfaces (13) of the battery cells (10) in two adjacent battery cell groups (110) are in contact with each other.

5. The battery assembly (100) according to any one of claims 2 to 4, wherein λ1 satisfies the relational expression: λ1 < 3 W/(m*K).

6. The battery assembly (100) of any one of claims 2 to 5, wherein D satisfies the relational expression: 0.01 m < D < 1 m.

7. The battery assembly (100) according to any one of claims 2 to 6, wherein distance between the electrode assembly (11) and an inner wall corresponding to the first surface (121) of the casing (12) being d, wall thickness of the casing (12)being a, thermal conductivity of the casing (12) being λ2, d, a and A satisfy the relational expression: A = 20* (d/2) * (0.3/a) * (160/λ2).

8. The battery assembly (100) according to claim 7, wherein a second substance layer (30) is arranged in spacing region between the electrode assembly (11) and the first surface (121) of the casing (12).

9. The battery assembly (100) according to claim 8, wherein the second substance layer (30) is at least one of an insulating heat insulation layer, an insulating heat dissipation layer, and an air layer.

10. The battery assembly (100) according to claim 7 or 8, wherein d satisfies the relational expression: 0.002 m < d < 0.012 m.

11. The battery assembly (100) according to any one of claims 2 to 10, wherein each side of the battery cell (10) in the thickness direction is a second surface respectively, each battery cell group (110) includes at least two battery cells (10) in which the second surfaces (122) being in contact with each other, the second surfaces (122) being perpendicular to the first surfaces (13) of the battery cells (10).

12. The battery assembly (100) according to claim 11, wherein a third substance layer (40) is arranged between the second surfaces (122) of two adjacent battery cells (10) in each battery cell group (110).

13. The battery assembly (100) according to claim 12, wherein the third substance layer (40) is at least one of an insulating heat insulation layer, an insulating heat dissipation layer, and an air layer.

14. The battery assembly (100) according to any one of claims 11 to 13, wherein an area of the second surface (122) is larger than that of the first surface (13) of the battery cell (10).

15. The battery assembly (100) according to any one of claims 1 to 14, further comprising a tray (30) and a cold plate (31), the tray (30) is arranged open on one side, the cold plate (31) is arranged the open side of the tray (30), and a plurality of the battery cells (10) are all arranged in the tray (30).

16. An electrical system (200) comprising a battery assembly (100) according to any one of claims 1 to 15.
